# EUROPEAN PATENT APPLICATION

(11) **EP 1 790 689 A1**
(43) Date of publication of application: **30.05.2007**
(21) Application number: 05753453.9
(22) Date of filing: 22.06.2005
(51) Int. Cl.: C08L 33/08, C08K 5/17

(54) **ACRYLIC RUBBER COMPOSITION AND ACRYLIC RUBBER CROSSLINKED PRODUCT**

(30) Priority: 23.06.2004 JP 2004184377
(71) Applicant: ZEON CORPORATION, Tokyo 100-8246 (JP)
(72) Inventor: Ohishi, Takeshi, Chiyoda-ku, Tokyo 100-8246 (JP); Tajima, Tadashi, Chiyoda-ku, Tokyo 100-8246 (JP)
(74) Representative: Albrecht, Thomas
(86) International application number: PCT/JP2005/011435
(87) International publication number: WO 2006/001299

(57) **Abstract**

It is to provide an acrylic rubber composition which provides an acrylic rubber vulcanizate retaining high tensile strength and modulus even if a long-termthermal load is applied and contains no component limited by environmental regulations. The above object is attained by an acrylic rubber composition comprising 100 parts by weight of a carboxyl group-containing acrylic rubber and 0.3 to 8 parts by weight of a styrenated diphenylamine compound, and by an acrylic rubber composition further comprising 0.05 to 20 parts by weight of a crosslinking agent besides the above components.

## Description

### TECHNICAL FIELD

The present invention relates to an acrylic rubber composition which is to be a material of an acrylic rubber vulcanizate having excellent heat resistance, and, particularly to an acrylic rubber composition providing an acrylic rubber vulcanizate retaining high levels of tensile strength and modulus after a thermal load is applied.

### BACKGROUND ART

Acrylic rubbers are superior in heat resistance and oil resistance and are therefore widely used in the fields related to vehicles. In recent years, acrylic rubbers more superior in heat resistance and particularly resistance to thermal aging have been desired as a seal material, hose material, vibration proofing material, tubing material, belt material, or boot material.

An antioxidant is usually formulated with the intention of improving the thermal aging resistance of rubber products. In acrylic rubbers, a composition formulated with a diphenylamine antioxidant such as 4,4'-bis(α,α'-dimethylbenzyl)diphenylamine (hereinafter abbreviated as "CD") is used to decrease a change in elongation and hardness measured after a thermal load is applied. However, the addition of CD has the problem as to a large change in tensile strength and modulus after the thermal load is applied. Patent document 1 proposes a composition having the intention of improving initial and long-term resistance to thermal aging by using a combination of an aromatic secondary amine with the property of easy moving such as alkylated diphenylamine or alkylaryl-p-phenylenediamine, and an aromatic secondary amine with the property of lagged moving such as the above (CD) or five-aromatic ring-containing diamine. However, because there are various environments where these rubber products are used, there are a few cases where the ratio of these combined products fits and therefore the initial and log-term resistance to thermal aging is insufficiently improved. The applicant of this case previously proposed a composition prepared by formulating an aromatic secondary amine and a nickel dialkyldithiocarbamate in a carboxyl group-containing acrylic rubber (Patent document 2). This composition provides a vulcanizate having high resistance to thermal aging. However, it has been necessary to submit a report on the use of the above nickel compound to a Local Government Unit by the Law of PRTR (Pollutant Release and Transfer Register) enforced on March in 2001.

Therefore, it is desired to develop an acrylic rubber composition which provides a vulcanizate that has significant resistance to thermal aging stably in widely variable working environments and has, particularly, high tensile strength and modulus retained after a thermal load is applied for a long time and is free from an environmental limitation.
[Patent document 1]
   Japanese Patent Application Laid-Open (JP-A) No. 11-21411
[Patent document 2]
   JP-A No. 2001-207008

### DISCLOSURE OF INVENTION

### Problem to be solved by the invention

It is an object of the present invention to provide an acrylic rubber composition which gives an acrylic rubber vulcanizate retaining high tensile strength and modulus even if a long-term thermal load is applied and contains no component limited by environmental regulations.

### Means for solving the problem

The present inventors have made earnest studies to solve the above problem and, as a result, found that the above object can be attained by an acrylic rubber composition containing an acrylic rubber having a carboxyl group at a crosslinking point and a specific amount of styrenated diphenylamine compound.

Accordingly, the present invention provides following inventions 1 to 7.
1. An acrylic rubber composition comprising a carboxyl group-containingacrylicrubber, andadiphenylaminecompound containing at least one of 4-(α-monoalkylbenzyl)diphenylamine and 4, 4'-bis (α-monoalkylbenzyl) diphenylamine in an amount of 0.3 to 8 parts by weight based on 100 parts by weight of the carboxyl group-containing acrylic rubber.
2. The acrylic rubber composition according to the above 1, wherein the above diphenylamine compound is a styrenated diphenylamine.
3. The acrylic rubber composition according to the above 1 or 2, wherein the above carboxyl group-containing acrylic rubber is an α,β-ethylenically unsaturated monocarboxylic acid having 3 to 12 carbon atoms.
4. The acrylic rubber composition according to any one of the above 1 to 3, wherein the mole equivalent of carboxyl groups in the above carboxyl group-containing acrylic rubber is 4×10⁻⁴ to 4×10⁻¹ ephr.
5. The acrylic rubber composition according to any one of the above 1 to 4, the composition further comprising 0.05 to 20 parts by weight of a crosslinking agent.
6. The acrylic rubber composition according to the above 5, wherein the above crosslinking agent contains at least one of polyvalent amine compounds and polyvalent hydrazide compounds.
7. An acrylic rubber vulcanizate produced by crosslinking the acrylic rubber composition according to the above 5 or 6.

### Effect of the invention

The acrylic rubber vulcanizate obtained from the acrylic rubber composition of the present invention retains a high level of tensile strength and modulus even if a long-term thermal load is applied and contains no component limited by environmental regulations.

### Best Mode for Carrying Out the Invention

An acrylic rubber composition according to the present invention comprises a carboxyl group-containing acrylic rubber, and a diphenylamine compound containing 4-(α-monoalkylbenzyl)diphenylamine and 4,4'-bis (α-monoalkylbenzyl) diphenylamine in an amount of 0.3 to 8 parts by weight based on 100 parts by weight of the carboxyl group-containing acrylic rubber. Particularly, the acrylic rubber composition of the present invention preferably contains a styrenated diphenylamine compound in an amount of 0.3 to 8 parts by weight based on 100 parts by weight of the carboxyl group-containing acrylic rubber and further a crosslinking agent in an amount of 0.05 to 20 parts by weight based on the composition.

The carboxyl group-containing acrylic rubber is an acrylic rubber having a carboxyl group at a crosslinking point and is more improved in thermal aging resistance, more reduced in change in hardness after a thermal load is applied and particularly more reduced in compression set than the conventional chlorine group-containing acrylic rubber or epoxy group-containing acrylic rubber which have a chlorine group or epoxy group at a crosslinking point.

The carboxyl group-containing acrylic rubber used in the present invention may be any type among (i) an acrylic rubber having a carboxyl group-containing monomer unit as a copolymer monomer unit, (ii) an acrylic rubber obtained by graft modifying a raw acrylic rubber with a carbon-carbon unsaturated bond-containing compound having a carboxyl group thereon in the presence of a radical initiator and (iii) an acrylic rubber obtained by converting a part of carboxylic acid derivative groups such as carboxylate group and acid amide group in an acrylic rubber molecule into carboxyl group by hydrolysis. Here, the acrylic rubber is a polymer containing a (meth) acrylate monomer (which means an acrylate monomer and/or a methacrylate monomer. Hereinafter, the same to, for example, methyl (meth)acrylate) unit in an amount of 70% by weight or more and preferably 80% by weight or more.

In the present invention, the content of a carboxyl group in the carboxyl group-containing acrylic rubber, that is, the mole equivalent of carboxyl groups (ephr) per 100 g of the acrylic rubber is preferably 4×10⁻⁴ to 4×10⁻¹ (ephr), more preferably 1×10⁻³ to 2×10⁻¹ (ephr) andstillmorepreferably 5×10⁻³ to 1×10⁻¹ (ephr). When the content of a carboxyl group is too small, there is a fear that the crosslinking density of the vulcanizate is insufficient and good mechanical characteristics are not therefore obtained or the surface skin of the molded article lacks in smoothness. When the content of a carboxylic group is too large on the contrary, there is the possibility that the elongation of the vulcanizate is reduced or the compressive stress strain of the vulcanizate is increased.

Examples of the (meth) acrylate monomer which is a major raw material of the monomer unit constituting the acrylic rubber include an alkyl (meth)acrylate monomer and alkoxyalkyl(meth)acrylate monomer.

As the alkyl (meth) acrylate monomer, esters constituted an alkanol having 1 to 8 carbon atoms and a (meth)acrylic acid are preferable. Specific examples thereof include methyl(meth)acrylate, ethyl(meth)acrylate, n-propyl(meth)acrylate, n-butyl(meth)acrylate, isopropyl(meth)acrylate, isobutyl(meth)acrylate, n-hexyl(meth)acrylate, 2-ethylhexyl(meth)acrylate and cyclohexyl(meth)acrylate. Among these compounds, ethyl(meth)acrylate and n-butyl(meth)acrylate are preferable.

As the alkoxyalkyl(meth)acrylate monomer, esters constituted an alkoxyalkyl alcohol having 2 to 8 carbon atoms and a (meth) acrylic acid are preferable. Specific examples thereof include methoxymethyl(meth)acrylate, ethoxymethyl(meth)acrylate, 2-ethoxyethyl(meth)acrylate, 2-butoxyethyl(meth)acrylate, 2-methoxyethyl(meth)acrylate, 2-propoxyethyl(meth)acrylate, 3-methoxypropyl(meth)acrylate and 4-methoxybutyl(meth)acrylate. Among these groups, 2-ethoxyethyl(meth)acrylate and 2-methoxyethyl(meth)acrylate are preferable and 2-ethoxyethylacrylate and 2-methoxyethylacrylate are more preferable.

Any material may be used as the carboxyl group-containing monomer which is the raw material of the monomer unit constituting the above (i) type carboxyl group-containing acrylic rubber insofar as it is a carboxyl group-containing monomer copolymerizable with the above (meth)acrylate monomer. Preferable examples of the carboxyl group-containing monomer include α,β-ethylenically unsaturated monocarboxylic acids having 3 to 12 carbon atoms, α,β-ethylenically unsaturated dicarboxylic acids having 4 to 12 carbon atoms, and monoesters constituted α,β-ethylenically unsaturated dicarboxylic acids having 4 to 11 carbon atoms and alkanols having 1 to 8 carbon atoms.

Examples of the α,β-ethylenically unsaturated monocarboxylic acid having 3 to 12 carbon atoms include acrylic acid, methacrylic acid, ethylacrylic acid, crotonic acid and cinnamic acid. Examples of the α,β-ethylenically unsaturated dicarboxylic acid having 4 to 12 carbon atoms include butenedionic acids such as fumaric acid and maleic acid, itaconic acid, citraconic acid and chloromaleic acid. Examples of monoesters of the α,β-ethylenically unsaturated dicarboxylic acids having 4 to 11 carbon atoms and alkanols having 1 to 8 carbon atoms include monoalkyl butenedionates suchasmonomethyl fumarate, monoethyl fumarate, mono-n-butyl fumarate, monomethyl maleate, monoethyl maleate and mono-n-butyl maleate; butenedionic acid monoesters having an alicyclic structure such as monocyclopentyl fumarate, monocyclohexyl fumarate, monocyclohexenyl fumarate, monocyclopentyl maleate, monocyclohexyl maleate and monocyclohexenyl maleate; itaconic acid monoesters such as monomethyl itaconate, monoethyl itaconate and monobutyl itaconate; and mono-2-hydroxyethyl fumarate. Among these compounds, butenedionic acid monoalkyl esters and butenedionic acid monoesters having an alicyclic structure are preferable and mono-n-butyl fumarate, mono-n-butyl maleate, monocyclohexyl fumarate and monocyclohexyl maleate aremorepreferable. These compounds maybe used either singly or in combinations of two or more.

Among the above monomers, dicarboxylic acid can be used because it can generate a carboxyl group by hydrolysis when it is crosslinked even if it is copolymerized as an anhydride.

The above carboxyl group-containing acrylic rubber may be copolymerized with a monomer having a crosslinking point other than a carboxyl group. Examples of such a monomer include monomers having a halogen group, epoxy group or hydroxyl group; and diene monomers.

Examples of the halogen group-containing monomer include, though not particularly limited to, unsaturated alcohol esters of halogen-containing saturated carboxylic acids, haloalkyl(meth)acrylates, haloacyloxyalkyl(meth)acrylates, (haloacetylcarbamoyloxy)alkyl(meth)acrylates, halogen-containing unsaturated ethers, halogen-containing unsaturated ketons, halomethyl group-containing aromatic vinyl compounds, halogen-containing unsaturated amides and haloacetyl group-containing unsaturated monomers.

Examples of the unsaturated alcohol esters of halogen-containing saturated carboxylic acids include vinyl chloroacetate, vinyl 2-chloropropionate and allyl chloroacetate.

Examples of the haloalkyl(meth)acrylate include chloromethyl(meth)acrylate, 1-chloroethyl(meth)acrylate, 2-chloroethyl(meth)acrylate, 1,2-dichloroethyl(meth)acrylate, 2-chloropropyl(meth)acrylate, 3-chloropropyl(meth)acrylate and 2,3-dichloropropyl(meth)acrylate. Examples of the haloacyloxyalkyl(meth)acrylate include 2-(chloroacetoxy)ethyl(meth)acrylate, 2-(chloroacetoxy)propyl(meth)acrylate, 3-(chloroacetoxy)propyl(meth)acrylate and 3-(hydroxychloroacetoxy)propyl(meth)acrylate.

Examples of the (haloacetylcarbamoyloxy)alkyl(meth)acrylate include 2-(chloroacetylcarbamoyloxy)ethyl(meth)acrylate and 3-(chloroacetylcarbamoyloxy)propyl(meth)acrylate. Examples of the halogen-containing unsaturated ether include chloromethyl vinyl ether, 2-chloroethyl vinyl ether, 3-chloropropyl vinyl ether, 2-chloroethyl allyl ether and 3-chloropropyl allyl ether. Examples of the halogen-containing unsaturated ketone include 2-chloroethyl vinyl ketone, 3-chloropropyl vinyl ketone and 2-chloroethyl allyl ketone. Examples of the halomethyl group-containing aromatic vinyl compound include p-chloromethylstyrene, p-chloromethyl-α-methylstyrene and p-bis(chloromethyl)styrene. Examples of the halogen-containing unsaturated amide include N-chloromethyl(meth)acrylamide. Examples of the haloacetyl group-containing unsaturated monomer include 3-(hydroxychloroacetoxy)propyl allyl ether and p-vinylbenzyl chloroacetate.

Examples of the epoxy group-containing monomer may include, though not limited to, an epoxy group-containing (meth)acrylate, epoxy group-containing (meth)acryl ether and epoxy group-containing (meth)allyl ether. Examples of the epoxy group-containing (meth)acrylate include glycidyl(meth)acrylate. Examples of the epoxy group-containing (meth)acryl ether include (meth)acryl glycidyl ether. Examples of the epoxy group-containing (meth)allyl ether include (meth)allyl glycidyl ether.

Examples of the hydroxyl group-containing monomer include, though not particularly limited to, a hydroxyl group-containing (meth)acrylate, hydroxyl group-containing (meth) acrylamide and vinyl alcohol. Examples of the hydroxyl group-containing (meth)acrylate may include 2-hydroxyethyl(meth)acrylate, 2-hydroxypropyl(meth)acrylate, 3-hydroxypropyl(meth)acrylate, 2-hydroxybutyl(meth)acrylate, 3-hydroxybutyl(meth)acrylate and 4-hydroxybutyl(meth)acrylate. Examples of the hydroxyl group-containing (meth)acrylamide may include N-methylol(meth)acrylamide.

The diene monomers include conjugate diene monomers and non-conjugate diene monomers. Examples of the conjugate diene monomer include 1,3-butadiene, isoprene and piperilene. Examples of the non-conj ugate diene monomer include ethylidene norbornene, dicyclopentadiene, dicyclopentadienyl(meth)acrylate and 2-dicyclopentadienylethyl(meth)acrylate.

Among these monomer having a crosslinking point other than a carboxyl group, halogen group-containing monomers and epoxy group-containing monomers are preferable. The monomers having a crosslinking point other than a carboxyl group may be used either singly or in combinations of two or more.

The amount of the monomer unit providing a crosslinking point other than a carboxyl group in the above acrylic rubber is preferably 0 to 5% by weight and more preferably 0 to 3% by weight based on all monomer units.

Also, the above carboxyl group-containing acrylic rubber may have, besides a (meth) acrylate monomer, carboxyl group-containing monomer and, if needed, a monomer having a crosslinking point other than a carboxyl group, a monomer unit copolymerizable with above monomers as its structural monomer unit according to the need to the extent that the object of the present invention is not impaired. Examples of such a copolymerizable monomer include aromatic vinyl monomers, α,β-ethylenically unsaturated nitrile monomers, monomers having two or more acryloyloxy groups (which are polyfunctional acryl monomers) and other olefin monomers. The amount of the above monomer unit in the carboxyl group-containing acrylic rubber is preferably 0 to 49.9% by weight and more preferably 0 to 20% by weight.

Examples of the aromatic vinyl monomer include styrene, α-methylstyrene and divinylbenzene. As the α,β-ethylenically unsaturated nitrile monomers, acrylonitrile and methacrylonitrile are exemplified.

Examples of the polyfunctional acryl monomer include (meth)acrylic acid diester of ethylene glycol and (meth)acrylic acid diester of propylene glycol.

Examples of the above other olefin monomer include ethylene, propylene, vinyl acetate, ethyl vinyl ether and butyl vinyl ether. Among these groups, acrylonitrile and methacrylonitrile are preferable.

The Mooney viscosity (ML₁₊₄, 100°C) of the above carboxyl group-containing acrylic rubber is preferably 10 to 90, more preferably 15 to 80 and still more preferably 20 to 70. If the Mooney viscosity is too low, there is the case where the moldability of the acrylic rubber and the mechanical properties of the vulcanizate are deteriorated, whereas if the Mooney viscosity is too high, the moldability of the acrylic rubber is deteriorated.

The above carboxyl group-containing acrylic rubber may be produced by copolymerizing a monomer mixture comprising of a (meth)acrylate monomer, a carboxyl group-containing monomer, a monomer, if needed, having a crosslinking point other than a carboxyl group and a monomer, if needed, copolymerizable with these monomers. As the polymerizing method, any one of the known emulsion polymerization method, suspension polymerization method, bulkpolymerizationmethod and solution polymerization method may be used. Among these methods, the emulsion polymerization method under normal pressure is preferable from the viewpoint of running a polymerization reaction under easy control.

Examples of the carbon-carbon bond-containing compound having a carboxyl group that graft-modifies the acrylic rubber in the above (ii) type carboxyl group-containing acrylic rubber include α,β-ethylenically unsaturated monocarboxylic acids such as acrylic acid, methacrylic acid, α-ethylacrylic acid and 2-hydroxyethyl(meth)acrylic acid; α,β-ethylenically unsaturated dicarboxylic acids such as maleic acid, fumaric acid and itaconic acid; α,β-ethylenically unsaturated dicarboxylic acid anhydrides such as maleic acid anhydride, chloromaleic acid anhydride, butenylsuccinicacid anhydride, tetrahydrophthalic acid anhydride and citraconic acid anhydride; and α,β-ethylenically unsaturated dicarboxylic acid monoesters such as monomethyl maleate and monoethyl itaconate. The carboxyl group-containing acrylic rubber can be obtained by reacting the above carbon-carbon unsaturated bond-containing compound having a carboxyl group with the acrylic rubber dissolved in an organic solvent in the presence of a radical initiator.

As the carboxylic acid derivative group in the acrylic rubber molecule in the above (iii) type carboxyl group-containing acrylic rubber, a carboxylate group which a (meth)acrylate monomer unit has can be exemplified. The carboxyl group-containing acrylic rubber can be obtained, for example, by hydrolyzing a part of the carboxylate group of the acrylic rubber dissolved in an organic solvent in the presence of hydrochloric acid, sulfuric acid or sodium hydroxide.

The diphenylamine compound used in the composition of the present invention is a diphenylamine compound containing 4-(α-monoalkylbenzyl)diphenylamine or 4,4'-bis(α-monoalkylbenzyl)diphenylamine which both have an α-monoalkylbenzyl group at the p-position of diphenylamine, and is a compound containing at least one of 4-(α-monoalkylbenzyl)diphenylamine and 4,4'-bis(α-monoalkylbenzyl)diphenylamine.

The above α-monoalkylbenzyl group is not particularly limited insofar as it is a benzyl group having a monoalkyl group at the α-position, a compound with the monoalkyl group having 1 to 3 carbon atoms is preferable and a styrenated diphenylamine compound having one carbon atom is more preferable.

The styrenated diphenylamine compound is a compound represented by the following formula (1) or (2) or may be a mixture of the both.

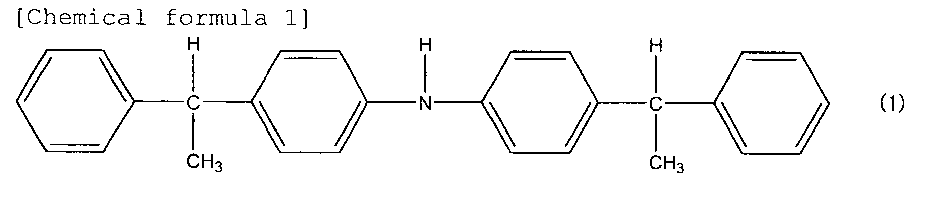

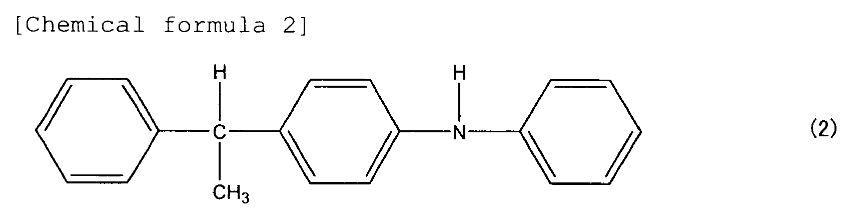

The above styrenated diphenylamine compound is not a material specified in the Law of PRTR. The content of the styrenated diphenylamine compound in the composition of the present invention is 0.3 to 8 parts by weight and preferably 0.5 to 6 parts by weight based on 100 parts by weight of the carboxyl group-containing acrylic rubber. When the content of the styrenated diphenylamine compound is too small, there is a fear that the thermal aging resistance of the vulcanizate is insufficient. When the amount of the styrenated diphenylamine compound is too large on the contrary, there is the possibility of insufficient thermal aging resistance and bleeding.

The acrylic rubber composition of the present invention may be made into a crosslinkable acrylic rubber composition by further containing a crosslinking agent. The crosslinking agent is not particularly limited insofar as it is a compound crosslinkable with a carboxyl group of the carboxyl group-containing acrylic rubber. Examples of the crosslinking agent include polyvalent amine compounds, polyvalent hydrazide compounds, polyvalent epoxy compounds, polyvalent isocyanate compounds, aziridine compounds, basic metal oxides and organic metal halides.

As the polyvalent amine compound, polyvalent amine compounds having 4 to 30 carbon atoms are preferable. Examples of the polyvalent amine compound include aliphatic polyvalent amine compounds and aromatic polyvalent amine compounds and exclude those having a non-conjugate nitrogen-carbon double bond such as a guanidine compound. Examples of the aliphatic polyvalent amine compound include hexamethylenediamine, hexamethylenediaminecarbamate and N,N'-dicynnamylidene-1,6-hexanediamine. Examples of the aromatic polyvalent amine compound include 4,4'-methylenedianiline, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, m-xylilenediamine, p-xylilenediamine and 1,3,5-benzenetriamine. These compounds may be used either singly or in combinations of two or more.

The polyvalent hydrazide compounds are compounds having at least two hydrazide groups. Examples thereof include dihydrazide oxalate, dihydrazide malonate, dihydrazide succinate, dihydrazide glutarate, dihydrazide adipate, dihydrazide pimelate, dihydrazide suberate, dihydrazide azelate, dihydrazide sebacate, dihydrazide didodecanoate, dihydrazide phthalate, dihydrazide isophthalate, dihydrazide terephthalate, dihydrazide 2,6-naphthalenedicarboxylate, dihydrazide naphthalate, dihydrazide acetonedicarboxylate, dihydrazide fumalate, dihydrazide maleate, dihydrazide itaconate, dihydrazide trimellitate, dihydrazide 1,3,5-benzenetricarboxylate, dihydrazide pyromellitate and dihydrazide aconitate. These compounds may be used either singly or in combinations of two or more.

Examples of the polyvalent epoxy compound include epoxy compounds having two or more epoxy groups in their molecules, for example, glycidyl ether type epoxy compounds such as phenol novolac type epoxy compounds, cresol novolac type epoxy compounds, cresol type epoxy compounds, bisphenol A type epoxy compounds, bisphenol F type epoxy compounds, brominated bisphenol A type epoxy compounds, brominated bisphenol F type epoxy compounds and hydrogenated bisphenol A type epoxy compounds; and other polyvalent epoxy compounds such as alicyclic epoxy compounds, glycidyl ester type epoxy compounds, glycidyl amine type epoxy compounds and isocyanurate type epoxy compounds. These compounds may be used either singly or in combinations of two or more.

As the polyvalent isocyanate compound, diisocyanates and triisocyanates each having 6 to 24 carbon atoms are preferable. Specific examples of the diisocyanates include 2,4-tolylenediisocyanate (2,4-TDI), 2,6-tolylenediisocyanate(2,6-TDI), 4,4'-diphenylmethanediisocyanate (MDI), hexamethylenediisocyanate, p-phenylenediisocyanate, m-phenylenediisocyanate and 1,5-naphthylenediisocyanate. Also, specific examples of triisocyanates include 1,3,6-hexamethylenetriisocyanate, 1,6,11-undecanetriisocyanate and bicycloheptanetriisocyanate. These compounds may be used either singly or in combinations of two or more.

Examples of the aziridine compound include tris-2,4,6-(1-aziridinyl)-1,3,5-triazine, tris[1-(2-methyl)aziridinyl]phosphinoxide and hexa[1-(2-methyl)aziridinyl]triphosphatriazine. These compounds may be used either singly or in combinations of two or more.

Examples of the basic metal oxide include zinc oxide, lead oxide, calcium oxide and magnesium oxide. These compounds may be used either singly or in combinations of two or more.

As the organic metal halide, dicyclopentadienyl metal dihalides are exemplified. Examples of the metal include titanium, zirconium and hafnium.

Among these crosslinking agents crosslinkable between carboxyl groups of the carboxyl group-containing acrylic rubber, polyvalent amine compounds and polyvalent hydrazide compounds are preferable, and particularly, hexamethylenediamine carbamate and 2,2'-bis[4-(4-aminophenoxy)phenyl]propane among the former compounds and dihydrazide adipate and dihydrazide isophthalate among the latter compounds are preferable.

The content of the crosslinking agent in the crosslinkable acrylic rubber composition of the present invention is preferably 0.05 to 20 parts by weight, more preferably 0.1 to 10 parts by weight and still more preferably 0.2 to 7 parts by weight based on 100 parts by weight of the carboxyl group-containing acrylic rubber. When the content of the crosslinking agent is too small, there is a fear that insufficient crosslinking is attained, which makes it difficult to retain the shape of the vulcanizate, whereas when the content of the crosslinking agent is too large, there is the possibility that the vulcanizate is excessively hardened and the elasticity of the crosslinked rubber is impaired.

The acrylic rubber composition of the present invention may be formulated with other additives such as a crosslinking promoter, reinforcing agent, processing aid, light stabilizer, plasticizer, lubricant, adhesive, lubricant agent, flame retardant, mildew-proofing agent, antistatic agent, colorant, filler and coupling agent.

The crosslinking promoter is not particularly limited, but particularly the crosslinking promoter to be used in combination with the above polyvalent amine compound crosslinking agent, those having a base dissociation constant of 10⁻¹² to 10⁶ in water at 25°C is preferable. Examples of the crosslinking promoter include guanidine compounds, imidazole compounds, quaternary onium salts, aliphatic monovalent secondary amine compounds, aliphatic monovalent tertiary amine compounds, tertiary phosphine compounds and weakly acidic alkali metal salts.

Examples of the guanidine compound include 1,3-di-o-tolylguanidine and 1,3-diphenylguanidine. Examples of the imidazole compound include 2-methylimidazole and 2-phenylimidazole. Examples of the quaternary onium salt include tetra-n-butylammonium bromide and octadecyl-tri-n-butylammonium bromide. Examples of the tertiary phosphine compound include triphenylphosphine and tri-p-tolylphosphine. Examples of the weakly acidic alkali metal salt include inorganic weak acid salts such as phosphates or carbonates of sodium or potassium, and organic weak acid salts such as stearate and laurate.

The aliphatic monovalent secondary amine compound is a compound obtained by substituting two hydrogen atoms of ammonia with aliphatic hydrocarbon groups. The aliphatic hydrocarbon groups to be substituted for the hydrogen atoms are preferably those having 1 to 30 carbon atoms and more preferably 8 to 20 carbon atoms. Specific examples thereof include dimethylamine, diethylamine, dipropylamine, diallylamine, diisopropylamine, di-n-butylamine, di-t-butylamine, di-sec-butylamine, dihexylamine, diheptylamine, dioctylamine, dinonylamine, didecylamine, diundecylamine, didodecylamine, ditridecylamine, ditetradecylamine, dipentadecylamine, dicetylamine, di-2-ethylhexylamine, dioctadecylamine, di-cis-9-octadecenylamine and dinonadecylamine. Among these compounds, dioctylamine, didecylamine, didodecylamine, ditetradecylamine, dicetylamine, dioctadecylamine, di-cis-9-octadecenylamine, dinonadecylamine, dicyclohexylamine and the like are preferable.

Also, the aliphatic monovalent tertiary amine compound is a compound obtained by substituting all the three hydrogen atoms of ammonia with aliphatic hydrocarbon groups. The aliphatic hydrocarbon groups to be substituted for the hydrogen atoms are preferably those having 1 to 30 carbon atoms and more preferably 1 to 22 carbon atoms. Specific examples thereof include trimethylamine, triethylamine, tripropylamine, triallylamine, triisopropylamine, tri-n-butylamine, tri-t-butylamine, tri-sec-butylamine, trihexylamine, triheptylamine, trioctylamine, trinonylamine, tridecylamine, triundecylamine, tridodecylamine, tritridecylamine, tritetradecylamine, tripentadecylamine, tricetylamine, tri-2-ethylhexylamine, trioctadecylamine, tri-cis-9-octadecenylamine, trinonadecylamine, N,N-dimethyldecylamine, N,N-dimethyldodecylamine, N,N-dimethyltetradecylamine, N,N-dimethylcetylamine, N,N-dimethyloctadecylamine, N,N-dimethylbehenylamine, N-methyldecylamine, N-methyldidodecylamine, N-methylditetradecylamine, N-methyldicetylamine, N-methyldioctadecylamine, N-methyldibehenylamine and dimethylcyclohexylamine. Among these compounds, for example, N,N-dimethyldodecylamine, N,N-dimethyltetradecylamine, N,N-dimethylcetylamine, N,N-dimethyloctadecylamine and N,N-dimethylbehenylamine are preferable.

The amount of the crosslinking promoter to be used is preferably 0.1 to 20 parts by weight, more preferably 0.2 to 15 parts by weight and still more preferably 0.3 to 10 parts by weight based on 100 parts by weight of the carboxyl group-containing acrylic rubber. If the amount of the crosslinking promoter is too large, there is a fear that crosslinking speed is too high during crosslinking, a bloom of the crosslinking promoter is produced on the surface of the vulcanizate and the vulcanizate becomes too hard. If the amount of the crosslinking promoter is too small, there is the possibility that the tensile strength of the vulcanizate is significantly reduced and changes in elongation and tensile strength after a thermal load is applied is excessively increased.

According to the need, polymers such as rubbers other than the acrylic rubber, elastomer and resin may be compounded in the acrylic rubber composition of the present invention. For example, rubbers such as natural rubbers, acrylic rubber containing no carboxyl group, polybutadiene rubber, polyisoprene rubber, styrene-butadiene rubber and acrylonitrile-butadiene rubber; elastomers such as an olefin elastomer, styrene elastomer, vinyl chloride elastomer, polyester elastomer, polyamide elastomer, polyurethane elastomer and polysiloxane elastomer; and resins such as a polyolefin resin, polystyrene resin, polyacryl resin, polyphenylene ether resin, polyester resin, polycarbonate resin and polyamide resin may be compounded.

As a method of preparing the acrylic rubber composition of the present invention, a proper mixing method such as roll mixing, Banbury's mixing, screw mixing or solution mixing may be adopted. Although no particular limitation is imposed on the procedures of formulation, it is preferable to adopt the following procedures: first, components which are resistant to thermal reaction or decomposition are mixed sufficiently and then, components, for example, a crosslinking agent and a crosslinking adjuvant, which are easily reacted and decomposed are mixed at a temperature at which the reaction and decomposition are prevented in a short time.

The acrylic rubber composition of the present invention can be molded and crosslinked by a molding method such as extrusion molding, injection molding, transfer molding or compression molding.

For the extrusion molding, usual procedures used in rubber processing may be adopted. Specifically, the acrylic rubber composition prepared by roll mixing is fed to a feed port of an extruder and softened by heating from a barrel during the course of feeding it to a head part by a screw. Then, the softened composition is made to pass through a dice having a specified shape disposed in the head part to obtain a lengthy extrusion molded product having an intended sectional shape (plate, bar, pipe, hose and modified products) . The temperature of the barrel is preferably 50 to 120°C and more preferably 60 to 100°C. The temperature of the head is preferably 60 to 130°C and more preferably 60 to 110°C. The temperature of the dice is preferably 70 to 130°C and more preferably 80 to 100°C. The molded article obtained by extrusion-molding in the above manner is heated at 130°C to 220°C and preferably 140°C to 200°C in an oven using a heat source such as electricity, hot air and steam to crosslink (primary crosslinking), thereby obtaining an acrylic rubber vulcanizate.

In the injection molding, transfer molding and compression molding, the composition of the present invention is filled in a cavity of a metal mold which has a shape corresponding to one or a few products to give shape and then, the metal mold is heated to, preferably 130°C to 220°C and more preferably 140°C to 200°C to crosslink (primary crosslinking) to obtain an acrylic rubber vulcanizate.

The vulcanizate obtained by the primary crosslinking may be, according to the need, further heated at 130°C to 220°C and preferably 140°C to 200°C for 1 to 48 hours in an oven using a heat source such as electricity, hot air and steam to crosslink (secondary crosslinking), thereby obtaining an acrylic rubber vulcanizate.

The acrylic rubber vulcanizate of the present invention has significantly excellent aging resistance. Specifically, even if a long-term thermal load is applied to the vulcanizate, it retains tensile strength and modulus at high levels and is also reduced in the rate of changes in compression set, elongation and hardness. Also, the above styrenated diphenylamine compound is not a material specified in the Law of PRTR, and therefore, the vulcanizate is not limited by any environmental regulation.

Accordingly, the vulcanizate of the present invention is preferably used for seal materials such as an O-ring, gasket, oil seal and bearing seal; cushioning materials; vibration proofing materials; wire coating materials; industrial belts; tubes/hoses; and seats in wide fields, for example, such as transporting machines of vehicles, general instruments and electric devices.

### EXAMPLES

The present invention will be explained in more detail by way of examples and comparative examples. In the following descriptions, all designations of "parts" and "%" are on weight basis, unless otherwise noted. Also, a test and evaluation of each characteristic are made as follows.

### (1) Mooney viscosity

The Mooney viscosity (ML₁₊₄, 100°C) was measured according to JIS K 6300.

### (2) Original properties and thermal aging properties (tensile strength, elongation, 100% modulus and hardness)

The acrylic rubber composition was molded and crosslinked at 170°C for 20 minutes by a press to obtain a 15 cm long 15 cm wide and 2 mm thick sheet, which was further allowed to stand in a 170°C oven for 4 hours to obtain a secondarily crosslinked sheet. This sheet was punched by a No. 3 type dumbbell to prepare a test piece, which was then used to measure the following items.

First, the tensile strength, rupture elongation (elongation) and 100% modulus of the test piece were measured according to the tensile test of JIS K6251 and the hardness of the test piece was measured using a durometer hardness tester type-A according to the hardness test of JIS K6253 at normal temperature. In this way, original properties were determined.

Then, according to JIS K 6257, the same test pieces as above were placed under a circumstance kept at 175°C for 70 hours and 500 hours respectively to carry out thermal aging using air heating and then, the tensile strength, elongation, 100% modulus and hardness of each piece were measured. The measured values (thermal aging properties) of the thermally aged sample were compared with the original properties to find rates (percentages) of change in the case of the tensile strength, elongation and 100% modulus and change (difference) in the case of the hardness. As each of these values is close to 0, the sample is superior in heat resistance. With respect to the rate of change in the 100% modulus, a negative change specifically shows a reduction in elastic modulus and there is a fear as to, for example, a deterioration in seal characteristics specific to rubbers, and therefore a positive change shows the sample superior.

### (3) Rate of compression set

The acrylic rubber composition was molded and crosslinked at 170°C for 20 minutes by a press to produce a cylindrical test piece having a diameter of 29 mm and a height of 12.5 mm, which was further allowed to stand in a 170°C oven for 4 hours to obtain a secondarily crosslinked sample. According to JIS K 6262, the above test piece was compressed by 25% and allowed to stand at 175°C for 70 hours as it was. Then, the test piece was released from the compressed state to measure the rate of compression set.

### acrylic rubber Production Example 1

A polymerizing reactor equipped with temperature gauge and a stirrer was charged with 200 parts of water, 3 parts of sodium lauryl sulfate, 49 parts of ethylacrylate, 49 parts of mono-n-butylacrylate and 2 parts of mono-n-butyl fumarate. Deaeration under reduced pressure and substitution of the atmosphere with nitrogen were conducted twice to thoroughly remove oxygen from the reactor. Then, 0.005 parts of cumene hydroperoxide and 0.002 parts of sodium formaldehyde sulfoxylate were added to the mixture to start emulsion polymerization at 30°C under normal pressure and the reaction was continued until the rate of polymerization conversion reached 95%. The obtained emulsion polymerization solution was solidified by adding an aqueous calcium chloride solution, washed with water and dried to obtain an acrylic rubber "a". The composition of the acrylic rubber "a" was as follows: ethylacrylate monomer unit: 49%, n-butylacrylate monomer unit: 49% and mono-n-butyl fumarate unit: 2% (content of a carboxyl group: 1.25×10⁻² ephr), and had a Mooney viscosity (ML₁₊₄, 100°C) of 35.

### Example 1

100 parts of the acrylic rubber "a", 60 parts of carbon black (FEF carbon, manufactured by Tokai Carbon Co., Ltd.) as a reinforcing agent, 2 parts of stearic acid as a processing aid and 0.5 parts of styrenated diphenylamine {Stearer LAS, manufactured by Seiko Chemical Co,. Ltd., a mixture of the compounds of the above formulae (1) and (2)} were placed in Banbury Mixer. The resulting mixture was kneaded at 50°C and then transferred to an open roll. Then, 1 part of 2,2'-bis[4-(4-aminophenoxy)phenyl]propane asacrosslinking agent and 2 parts of 1, 3-di-o-tolylguanidine as a crosslinking promoter were added to the mixture, which was kneaded at 40°C to prepare an acrylic rubber composition.

The obtained acrylic rubber composition was used to make tests in original properties, thermal aging properties (tensile strength, elongation, 100% modulus and hardness) and compression set. The results are shown in Table 1. Examples 2 to 4, Comparative Examples 1 to 4

Acrylic rubber compositions were obtained in the same formulations as in Example 1 except that as for each of the components shown in Table 1, the number of parts shown in Table 1 was used. However, in Example 4 and Comparative Example 4, 0.7 parts of dihydrazide adipate was used as the crosslinking agent in place of 1 part of 2,2'-bis[4-(4-aminophenoxy)phenyl]propane. Also, in Comparative Example 1, 2 parts of 4,4'-bis(α,α-dimethylbenzyl)diphenylamine (Nocrac CD, manufactured by OUCHI SHINKO CHEMICAL INDUSTRIAL CO., LTD., abbreviated as "CD" as required) was used as the antioxidant in place of 0.5 parts of styrenated diphenylamine.

Each of the obtained acrylic rubber compositions was used to make the same test and evaluation as in Example 1. The results are shown in Table 1.

**Table 1**

| | | | Example | | | | Comparative Example | | | |
|---|---|---|---|---|---|---|---|---|---|---|
| | | | 1 | 2 | 3 | 4 | 1 | 2 | 3 | 4 |
| | Acrylic rubber "a" | | 100 | 100 | 100 | 100 | 100 | 100 | 100 | 100 |
| Formulation (parts) | FEF carbon black | | 60 | 60 | 60 | 60 | 60 | 60 | 60 | 60 |
| | Stearic acid | | 2 | 2 | 2 | 2 | 2 | 2 | 2 | 2 |
| | Styrenated diphenylamine | | 0.5 | 2 | 5 | 2 | - | - | 10 | - |
| | 4,4'-bis(α,α'-dimethylbenzyl)diphenylamine | | - | - | - | - | 2 | - | - | 2 |
| | 2,2' -bis[4-(4-aminophenoxy)phenyl]propane | | 1 | 1 | 1 | - | 1 | 1 | 1 | - |
| | Dihydrazide adipate | | - | - | - | 0.7 | - | - | - | 0.7 |
| | 1,3-di-o-tolylguanidine | | 2 | 2 | 2 | 1 | 2 | 2 | 2 | 1 |
| | | Tensile strength (MPa) | 10.2 | 10.0 | 10.2 | 9.5 | 10.3 | 10.4 | 10.0 | 9.1 |
| Original properties | | Elongation (%) | 230 | 230 | 230 | 240 | 240 | 240 | 240 | 240 |
| | | 100% modulus (MPa) | 4.2 | 4.1 | 4.1 | 4.0 | 4.0 | 4.0 | 3.5 | 3.8 |
| | | Hardness (Duro A) | 70 | 70 | 69 | 74 | 66 | 70 | 70 | 73 |
| | | Tensile strength (MPa) | 9.0 | 9.5 | 9.6 | 9.2 | 7.5 | 9.0 | 9.5 | 7.7 |
| | 175°C 70 Hr | Tensile strength change (%) | -12 | -5 | -6 | -4 | -27 | -13 | -5 | -15 |
| Thermal aging properties | | Elongation change (%) | -9 | -9 | -13 | -17 | +8 | -8 | -21 | -4 |
| | | 100% modulus change (%) | +6 | +11 | +22 | +29 | -20 | +6 | +55 | -5 |
| | | Hardness change (Point) | +2 | +3 | +4 | +7 | -1 | +2 | +5 | +4 |
| | | Tensile strength (MPa) | 8.0 | 8.2 | 7.8 | 7.9 | 6.0 | 8.2 | 7.8 | 5.2 |
| | 175°C 500 Hr | Tensile strength change (%) | -22 | -18 | -24 | -15 | -42 | -21 | -22 | -43 |
| | | Elongation change (%) | -17 | -17 | -22 | -29 | -13 | -38 | -38 | -8 |
| | | 100% modulus change (%) | +1 | +2 | +15 | +52 | -25 | +49 | +50 | -22 |
| | | Hardness change (Point) | +10 | +13 | +15 | +13 | +5 | +18 | +17 | +10 |
| Compression set (175°C, 70 Hr) (%) | | | 17.7 | 19.1 | 20.6 | 26.8 | 17.3 | 18.1 | 22.1 | 26.3 |

As shown in Table 1, the test results obtained when carbon was formulated shows that Comparative Example 1 formulated with the conventional antioxidant [CD] was more reduced in changes of elongation and hardness, but more increased in changes of tensile strength and modulus after a thermal load was applied than Comparative Example 2 formulated with no antioxidant. Particularly, in the case of Comparative Example 1, the modulus change was negative. On the other hand, the acrylic rubber vulcanizates of the present invention were all reduced in the changes of elongation and hardness after a thermal load was applied and also decreased in the changes of tensile strength and 100% modulus after a long-term (after 500 hr) thermal load was applied (Examples 1 to 4) . Particularly, the situation of the modulus change was improved to be positive. When comparing Example 4 using dihydrazide adipate as the crosslinking agent with Comparative Example 4 (using "CD" as the antioxidant), the former was largely increased in 100% modulus, showing a rate of change of +52%, which was larger than the rate (-22%) of change of the latter on an absolute scale. However, the change was negative in Comparative Example 4 whereas the change was positive in Example 4 and therefore the effect of improvement was seen practically in Example 4. If the amount of styrenated diphenylamine to be added was excessive, the same properties as in Comparative Example 2 to which no antioxidant was added were obtained and therefore, no effect of improvement was seen and also the compression set was increased (Comparative Example 3).

### Example 5

An acrylic rubber composition was obtained in the same manner as in Example 1 except that the amount of carbon black was decreased to 25 parts from 60 parts, 30 parts of pyrogenic silica (Carplex CS-5, manufactured by Shionogi & Co., Ltd.) and 1.5 parts of γ-glycidoxypropyltrimethoxysilane as a silane coupling agent were added, and the amounts of styrenated diphenylamine and 2,2'-bis[4-(4-aminophenoxy)phenyl] propane were increased to 3 parts from 0.5 parts and to 1.2 parts from 1 part respectively. The obtained acrylic rubber composition was used to make the same test and evaluation as in Example 1. The results are shown in Table 2.

### Example 6 and Comparative Example 5

Acrylic rubber compositions were obtained in the same formulations as in Example 5 except that as for each of the components shown in Table 2, the number of parts shown in Table 2 was used. Each of the obtained acrylic rubber compositions was used to make the same test and evaluation as in Example 1. The results are shown in Table 1.

**Table 2**

| | | | Example | | Comparative Example |
|---|---|---|---|---|---|
| | | | 5 | 6 | 5 |
| | Acrylic rubber "a" | | 100 | 100 | 100 |
| Formulation (parts) | Pyrogenic sillica | | 30 | 30 | 30 |
| | Stearic acid | | 3 | 3 | 3 |
| | Carbon black | | 25 | 25 | 25 |
| | γ-glycidoxypropyltrimethoxysilane | | 1.5 | 0.5 | 1.5 |
| | 4,4'-bis(α,α'-dimethylbenzyl)diphenylamine | | - | - | 2 |
| | Styrenated diphenylamine | | 3 | 3 | - |
| | 2,2'-bis[4-(4-aminophenoxy)phenyl]propane | | 1.2 | 1.2 | 1.2 |
| | 1,3-di-o-tolylguanidine | | 2 | 2 | 2 |
| | | Tensile strength (MPa) | 11.4 | 11.3 | 11.3 |
| Original properties | | Elongation (%) | 289 | 254 | 294 |
| | | 100% modulus (MPa) | 3.8 | 4.2 | 3.3 |
| | | Hardness (Duro A) | 69 | 68 | 67 |
| | | Tensile strength (MPa) | 9.3 | 10.5 | 6.7 |
| | 175°C 70 Hr | Tensile strength change (%) | -19 | -7 | -41 |
| Thermal aging properties | | Elongation change (%) | -31 | -26 | -17 |
| | | 100% modulus change (%) | +44 | +47 | -2 |
| | | Hardness change (Point) | +12 | +12 | +7 |
| | | Tensile strength (MPa) | 8.8 | 9.4 | 5.7 |
| | 175°C 500 Hr | Tensile strength change (%) | -23 | -17 | -50 |
| | | Elongation change (%) | -49 | -51 | -48 |
| | | 100% modulus change (%) | +99 | +105 | +43 |
| | | Hardness change (Point) | +22 | +21 | +16 |
| Compression set (175°C, 70 Hr) (%) | | | 16.7 | 17.7 | 15.3 |

As shown in Table 2, the test results obtained when silica was formulated shows that as compared with Comparative Example 5 using the conventional "CD" as the antioxidant, the acrylic rubber vulcanizate of the present invention had a large tensile strength after a thermal load was applied and also, the modulus change was improved to be positive (Example 6).

## Claims

1. An acrylic rubber composition comprising a carboxyl group-containing acrylic rubber, and a diphenylamine compound containing at least one of 4-(α-monoalkylbenzyl)diphenylamine and 4,4'-bis(α-monoalkylbenzyl)diphenylamine in an amount of 0.3 to 8 parts by weight based on 100 parts by weight of the carboxyl group-containing acrylic rubber.

2. The acrylic rubber composition according to Claim 1, wherein the diphenylamine compound is a styrenated diphenylamine.

3. The acrylic rubber composition according to Claim 1 or 2, wherein the carboxyl group-containing acrylic rubber is an α,β-ethylenically unsaturated monocarboxylic acid having 3 to 12 carbon atoms.

4. The acrylic rubber composition according to any one of Claims 1 to 3, wherein the mole equivalent of carboxyl groups in the carboxyl group-containing acrylic rubber is 4×10⁻⁴ to 4×10⁻¹ ephr.

5. The acrylic rubber composition according to any one of Claims 1 to 4, the composition further comprising 0.05 to 20 parts by weight of a crosslinking agent.

6. The acrylic rubber composition according to Claim 5, wherein the crosslinking agent contains at least one of polyvalent amine compounds and polyvalent hydrazide compounds.

7. An acrylic rubber vulcanizate produced by crosslinking the acrylic rubber composition as claimed in Claim 5 or 6.

## Amended claims

### Amended claims under Art. 19.1 PCT

**1.** An acrylic rubber composition comprising a carboxyl group-containing acrylic rubber, and a diphenylamine compound containing at least one of 4-(α-monoalkylbenzyl)diphenylamine and 4,4'-bis (α-monoalkylbenzyl)diphenylamine in an amount of 0.3 to 8 parts by weight based on 100 parts by weight of the carboxyl group-containing acrylic rubber.

**2.** The acrylic rubber composition according to Claim 1, wherein the diphenylamine compound is a styrenated diphenylamine.

**3.** The acrylic rubber composition according to Claim 1 or 2, wherein the carboxyl group-containing acrylic rubber is an α,β-ethylenically unsaturated monocarboxylic acid having 3 to 12 carbon atoms.

**4.** The acrylic rubber composition according to any one of Claims 1 to 3, wherein the mole equivalent of carboxyl groups in the carboxyl group-containing acrylic rubber is 4×10⁻⁴ to 4×10⁻¹ ephr.

**5.** The acrylic rubber composition according to any one of Claims 1 to 4, the composition further comprising 0.05 to 20 parts by weight of a crosslinking agent.

**6.** The acrylic rubber composition according to Claim 5, wherein the crosslinking agent contains at least one of polyvalent amine compounds and polyvalent hydrazide compounds.
